(19) Europäisches Patentamt
European Patent Office
Office européen des brevets

(11) **EP 4 682 387 A1**

(12) **EUROPÄISCHE PATENTANMELDUNG**

(43) Veröffentlichungstag:
**21.01.2026 Patentblatt 2026/04**

(21) Anmeldenummer: **25188838.4**

(22) Anmeldetag: **10.07.2025**

(51) Internationale Patentklassifikation (IPC):
**F04D 25/08** *(2006.01)* **F04D 27/00** *(2006.01)*
**F04D 29/056** *(2006.01)*

(52) Gemeinsame Patentklassifikation (CPC):
**F04D 27/001; F04D 25/08; F04D 29/056;**
F05D 2270/304; F05D 2270/335

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **19.07.2024 DE 102024120523**

(71) Anmelder: **ebm-papst Mulfingen GmbH & Co. KGaA & Co. KG**
**74673 Mulfingen (DE)**

(72) Erfinder:
• **Schroth, Sebastian**
**74653 Kupferzell (DE)**
• **Borck, Markus**
**97959 Assamstadt (DE)**

(74) Vertreter: **Rüger Abel Patentanwälte PartGmbB**
**Webergasse 3**
**73728 Esslingen a. N. (DE)**

(54) **ROTATIONSVORRICHTUNG UND VERFAHREN ZUR ERMITTLUNG EINES ZUSTANDS EINER LAGERANORDNUNG**

(57) Die Erfindung betrifft eine Rotationsvorrichtung (10), insbesondere eine Strömungserzeugungsvorrichtung (11) sowie ein Verfahren (V1, V2), die bzw. das dazu eingerichtet ist, einen Zustand einer Lageranordnung (18) der Rotationsvorrichtung (10) zu ermitteln. Die Lageranordnung (18) lagert einen Rotor (16) eines Elektromotors (14) und/oder eine den Rotor aufweisende Rotoranordnung (17) drehbar um eine Drehachse (A). Es wird wenigstens ein Drehbewegungsparameter ermittelt, der die Drehbewegung um die Drehachse (A) beschreibt sowie wenigstens ein Leistungsparameter, der die Leistung des Elektromotors (14) beschreibt. Die Ermittlung des wenigstens einen Drehbewegungsparameters (D) und des wenigstens einen Leistungsparameters (P) erfolgt zu einem aktuellen Betrachtungszeitpunkt, insbesondere an wenigstens einem Betrachtungszeitpunkt in einem Ermittlungszeitraum (Δt). Der wenigstens eine Drehbewegungsparameter (D) und der wenigstens eine Leistungsparameter (P) werden in Bezug zueinander ausgewertet und daraus ein Zustandsparameter (B) ermittelt, der den Zustand der Lageranordnung (18) beschreibt. Insbesondere wird hierfür ein linearer Anteil einer Leistung-Drehbewegung-Korrelation (KA) zwischen dem wenigstens einen aktuellen Drehbewegungsparameter (D) und dem wenigstens einen aktuellen Leistungsparameter (P) verwendet.

Fig. 1

**Beschreibung**

Die Erfindung betrifft eine Rotationsvorrichtung sowie ein Verfahren zur Ermittlung eines Zustands einer Lageranordnung der Rotationsvorrichtung. Die Rotationsvorrichtung hat eine Statoranordnung und eine relativ zur Statoranordnung um eine Drehachse drehbar gelagerte Rotoranordnung. Die Rotationsvorrichtung hat einen Elektromotor mit einem Stator, der Bestandteil der Statoranordnung ist, sowie einem Rotor, der der Bestandteil der Rotoranordnung ist. Die Rotoranordnung kann am Rotor des Elektromotors angebrachte oder mit dem Rotor des Elektromotors antriebsverbundene, um die Drehachse drehbar antreibbare Rotationskörper aufweisen. Beispielsweise sind die Rotationskörper zur Erzeugung einer Fluidströmung bei drehend angetriebener Rotoranordnung eingerichtet. Die Rotationskörper können somit beispielsweise Flügel einer Strömungserzeugungsvorrichtung aufweisen. Die Strömungserzeugungsvorrichtung kann beispielsweise ein Ventilator zur Erzeugung einer Gasströmung, insbesondere Luftströmung, oder eine Pumpe zur Erzeugung einer Flüssigkeitsströmung sein.

DE 10 2009 034 369 B3 offenbart eine Steuerung eines Lüfters. Die Steuerung hat das Ziel, eine gewünschte Lüfterdrehzahl zu erreichen. Durch Spannungsabweichungen und Alterungseffekte kann es zu einer Abweichung der gesteuerten Drehzahl kommen. Über einen Alterungstest kann ein Alterungsfaktor ermittelt werden, der eine Drehzahländerung abhängig von dem Alter des Lüfters beschreibt. Außerdem kann eine Kennlinie ermittelt werden, die den Zusammenhang zwischen einer Spannungsabweichung am Lüftermotor und einer Drehzahländerung beschreibt. Basierend auf dem Alterungsfaktor und der gemessenen Spannungsabweichung kann eine verbesserte Drehzahlsteuerung erreicht werden.

EP 2 174 097 B1 offenbart einen Drehgeber mit Überwachung des Lagerverschleißes. Der Drehgeber erzeugt ein Messsignal, das die Winkellage und/oder Winkelgeschwindigkeit beschreibt. Er weist ein Zählwerk auf, in dem ein Verschleißzustandswert abgespeichert ist. Insbesondere kann eine Gesamtumdrehungszahl abgespeichert werden, die somit die zunehmende Alterung des Drehgebers beschreibt.

Der vorstehend genannte Stand der Technik berücksichtigt daher bei einer Rotationsvorrichtung eine zunehmende Alterung des Lagers, wobei der Einfluss der Alterung auf den Rotationszustand, beispielsweise durch Versuche, ermittelt werden kann. Nachteilig ist dabei, dass bei den Alterungsversuchen nicht berücksichtigte Einwirkungen nicht erkannt werden können. Der Lagerzustand wird mit zunehmender Betriebsdauer der Rotationsvorrichtung geschätzt.

Ein Antrieb und ein Verfahren zur Feinabstimmung des Antriebs sind in DE 10 2020 114 222 A1 beschrieben. Mittels eines Mikrofons wird das Geräusch eines Antriebs ermittelt und analysiert. Das aufgenommene Geräusch wird mit einem bekannten, gespeicherten Geräuschsignal verglichen, um eine Einstellung des Antriebs zu optimieren.

Ausgehend vom Stand der Technik kann es als Aufgabe der vorliegenden Erfindung angesehen werden, eine Rotationsvorrichtung und ein Verfahren zu schaffen, das auf einfache Weise eine Ermittlung des aktuellen Zustands einer Lageranordnung der Rotationsvorrichtung ermöglicht.

Diese Aufgabe wird durch eine Rotationsvorrichtung mit den Merkmalen des Patentanspruches 1 sowie ein Verfahren mit den Merkmalen des Patentanspruches 14 gelöst.

Die Rotationsvorrichtung hat einen Elektromotor mit einem Stator und einem Rotor. Der Rotor ist Bestandteil einer Rotoranordnung. Die Rotoranordnung ist mittels einer Lageranordnung drehbar um eine Drehachse gelagert. Die Rotoranordnung hat mit dem Rotor antriebsverbundene oder am Rotor befestigte Rotationskörper. Die Rotationskörper können beispielsweise Flügel eines Ventilators bzw. Ventilatorrades sein, die bzw. das um die Drehachse drehbar gelagert sind. Die Rotationskörper können auch Flügel einer Pumpe sein. Somit kann die Rotationsvorrichtung eine Strömungserzeugungsvorrichtung sein. Mittels der Strömungserzeugungsvorrichtung kann eine Fluidströmung (Gasoder Flüssigkeitsströmung) erzeugt werden.

Die Rotationsvorrichtung weist eine Ermittlungseinrichtung auf. Die Ermittlungseinrichtung ist dazu eingerichtet, einen aktuellen Drehbewegungsparameter zu ermitteln, der die aktuelle Drehbewegung der Rotoranordnung um die Drehachse charakterisiert. Der Drehbewegungsparameter kann beispielsweise die Drehzahl und/oder Winkelgeschwindigkeit der Rotoranordnung um die Drehachse direkt oder indirekt angeben. Die Ermittlungseinrichtung kann als Drehbewegungsparameter einen der nachfolgend genannten Parameter oder mehrere der nachfolgend genannten Parameter in beliebiger Kombination ermitteln:

- eine Drehzahl der Rotoranordnung,
- eine Winkelgeschwindigkeit der Rotoranordnung,
- eine durch die Drehbewegung des Rotors des Elektromotors induzierte elektromagnetische Kraft und/oder Spannung in einer Statorwicklung des Stators des Elektromotors,
- einen die zeitliche und/oder räumliche Änderung eines Statormagnetfeldes des Stators des Elektromotors (z.B. Umlaufbewegung um die Drehachse) beschreibenden Magnetfeldparameter, beispielsweise die Frequenz oder Umlaufgeschwindigkeit des Statormagnetfeldes um die Drehachse,
- einen zur Drehbewegungssteuerung des Rotors des Elektromotors verwendeten Motorsteuerparameter.

Die Ermittlungseinrichtung ist außerdem dazu eingerichtet, wenigstens einen die aktuelle elektrische und/ oder mechanische Leistung des Elektromotors charakterisierenden Leistungsparameter zu ermitteln. Als aktueller Leistungsparameter kann einer der nachfolgend genannten Parameter oder mehrere der nachfolgenden genannten Parameter in beliebiger Kombination ermittelt werden:

- eine Motorspannung des Elektromotors,
- ein Motorstrom des Elektromotors,
- eine elektrische Leistung des Elektromotors,
- ein Drehmoment des Elektromotors,
- einen zur Leistungssteuerung des Elektromotors verwendeten Motorsteuerparameter, beispielsweise ein Tastgrad einer zur Einstellung der elektrischen Leistung verwendeten elektrischen Größe, wie z.B. der Motorstrom.

Der wenigstens eine aktuelle Drehbewegungsparameter und/oder der wenigstens eine aktuelle Leistungsparameter können direkt sensorisch gemessen oder basierend auf einem oder mehreren Sensorwerten rechnerisch ermittelt und/oder durch Simulation und/oder durch einen Beobachter ermittelt werden. Zusätzlich oder alternativ kann der wenigstens eine Leistungsparameter und/oder der wenigstens eine Drehbewegungsparameter basierend auf einer zur Steuerung des Elektromotors verwendeten Motorsteuerparameters ermittelt werden.

Die Rotationsvorrichtung weist außerdem eine Auswerteeinrichtung auf. Die Auswerteeinrichtung ist dazu eingerichtet, den von der Ermittlungseinrichtung ermittelten wenigstens einen Drehbewegungsparameter und den wenigstens einen Leistungsparameter in Bezug zueinander auszuwerten. Es wird dabei insbesondere eine aktuelle Leistung-Drehbewegung-Korrelation ermittelt, beispielsweise eine Gleichung, eine Kennlinie, eine Korrelationstabelle, eine Korrelationsfunktion oder irgendein anderer mathematischer Zusammenhang, der die aktuelle Leistung-Drehbewegung-Korrelation beschreibt. Im Rahmen der Ermittlung der Leistung-Drehbewegung-Korrelation wird der wenigstens eine Drehbewegungsparameter und/oder der wenigstens eine Leistungsparameter insbesondere durch ein mathematisches und/oder analytisches Verfahren verarbeitet, um daraus die Leistung-Drehbewegung-Korrelation zu erhalten. Dabei können sämtliche bekannten Näherungsverfahren (z.B. Polynomfitting), eine Fourieranalyse (insbesondere FFT), Verfahren des maschinellen Lernens und/oder Verfahren unter Verwendung von künstlicher Intelligenz (KI) eingesetzt werden.

Insbesondere wird bei der Ermittlung der Leistung-Drehbewegung-Korrelation eine zeitliche Änderung der Leistung des Elektromotors bei einer bekannten Drehbewegung der Rotoranordnung und/oder eine zeitliche Änderung der Drehbewegung der Rotoranordnung bei einer bekannten Leistung des Elektromotors verwendet. Die Ermittlung der Leistung-Drehbewegung-Korrelation kann als Vorverarbeitungsstufe für die weitere Auswertung angesehen werden.

Der wenigstens eine Drehbewegungsparameter beschreibt die aktuelle Drehbewegung der Rotoranordnung und der wenigstens eine Leistungsparameter beschreibt die aktuelle Leistung des Elektromotors, beispielsweise die elektrische Leistung. Der Begriff "aktuell" bedeutet in diesem Zusammenhang ein aktueller Zeitpunkt oder ein den aktuellen Zeitpunkt umfassenden Ermittlungszeitraum, während dem der wenigstens eine aktuelle Drehbewegungsparameter und der wenigstens eine aktuelle Leistungsparameter zeitkontinuierlich und/oder zeitdiskret zu mehreren Ermittlungszeitpunkten ermittelt werden. Der Ermittlungszeitraum kann einige Mikrosekunden oder auch einige Minuten betragen. Insbesondere ist der Ermittlungszeitraum kleiner als 30 Minuten, kleiner als 15 Minuten oder vorzugsweise kleiner als 5 Minuten. Jedenfalls ist der Ermittlungszeitraum zeitlich derart beschränkt, dass innerhalb des Ermittlungszeitraums keine nennenswerten Verschleiß- oder Alterungseffekte der Rotationsvorrichtung auftreten.

Beispielsweise kann mittels der Ermittlungseinrichtung und der Auswerteeinrichtung eine zeitliche Änderung der Drehbewegung der Rotoranordnung und/oder eine zeitliche Änderung der Leistung des Elektromotors erfasst und ausgewertet werden. Die Drehbewegung steht im Zusammenhang mit der Leistung des Elektromotors, so dass basierend darauf ermittelt werden kann, wie der Zustand der Lageranordnung ist. Je schlechter der Zustand der Lageranordnung ist, desto größer ist die Leistung des Elektromotors, die zur Erzielung einer vorgegebenen Drehbewegung (z.B. Drehzahl oder Winkelgeschwindigkeit) der Rotoranordnung erforderlich ist. Basierend darauf kann somit der Zustand der Lageranordnung ermittelt werden. Der Zustand der Lageranordnung kann beispielsweise an eine Bedienschnittstelle einer die Rotationsvorrichtung aufweisenden Anlage oder Maschine oder auch an eine externe Einrichtung (z.B. Server oder Cloud) übermittelt werden. Basierend darauf können Maßnahmen eingeleitet werden, gegebenenfalls eine Wartung oder eine Reparatur oder ein Austausch der Lageranordnung.

Eine basierend auf dem wenigstens einen Drehbewegungsparameter und dem wenigstens einen Leistungsparameter ermittelte Leistung-Drehbewegung-Korrelation kann insbesondere nicht konstante und nicht lineare Anteile aufweisen, beispielsweise Anteile des Grades 2 (quadratische Anteile) oder höher, die den Zusammenhang zwischen der Drehbewegung und der Leistung beschreiben. Die Leistung-Drehbewegung-Korrelation kann eine mathematische Funktion, beispielsweise ein Polynom mindestens des Grades 2 beschreiben, das die Leistung in Abhängigkeit von linearen und nicht linearen Anteilen der Drehbewegung angibt, zum Beispiel:

$$P = k_0 + k_1 \cdot D + k_2 \cdot D^2 + \cdots + k_n \cdot D^n \qquad (1)$$

wobei $P$ der Leistungsparameter, $D$ der Drehzahlparameter und $k_i$ Koeffizienten sind mit $i = 0, 1, 2, ..., n$. Die Koeffizienten $k_i$ können im Rahmen der Auswertung ermittelt werden, beispielsweise durch eine Berechnung, eine Schätzung, eine Simulation, einen Beobachter, eine Approximation oder andere statistische bzw. mathematische Methoden. Dazu können n Messungen, also beispielsweise bei n verschiedenen Drehzahlen, durchgeführt werden um n Koeffizienten $k_i$ bestimmen zu können. Wenn mehr Messungen vorliegen als Koeffizienten $k_i$ zu bestimmen sind, kann eine Regressionsfunktion eingesetzt werden, um die Koeffizienten $k_i$ zu ermitteln.

Die aktuelle Leistung-Drehbewegung-Korrelation gibt insbesondere auch einen linearen Zusammenhang zwischen der Drehbewegung der Rotoranordnung und der Leistung des Elektromotors an, der bei einer bevorzugten Ausführungsform ausschließlich oder in Kombination mit anderen Parametern zur Ermittlung des Zustandes der Lageranordnung verwendet wird (z.B. linearer Anteil des Polynoms des Grades n=2 oder n>2). Beispielsweise kann ein linearer Koeffizient $k_1$ des linearen Anteils zwischen der Leistung-Drehbewegung-Korrelation mit wenigstens einem Referenzwert verglichen und daraus der Zustand der Lageranordnung festgestellt werden. Im einfachsten Fall kann ein einziger Referenzwert als Schwellenwertvergleich zur Unterscheidung einer funktionsfähigen und einer wartungs- bzw. reparaturbedürftigen Lageranordnung verwendet werden. Optional können auch mehrere Referenzwerte zur Bildung unterschiedlicher Bewertungsstufen der Lageranordnung verwendet werden. Der wenigstens eine Referenzwert kann auch parameterabhängig sein in Form einer Referenztabelle, einer Referenzkennlinie oder eines Referenzkennfeldes, usw.

Insbesondere können bei einer derartigen, nicht lineare Anteile enthaltenden Leistung-Drehbewegung-Korrelation konstante Anteile, die unabhängig sind von dem wenigstens einen Drehbewegungsparameter sowie quadratische Anteile, bei denen der wenigstens eine Leistungsparameter abhängig ist vom Quadrat des wenigstens einen Drehbewegungsparameters - sowie optional enthaltene Anteile höheren Grades ($n \geq 3$) - bei der Ermittlung des Lagerzustandes unberücksichtigt bleiben. Die quadratischen Anteile beschreiben insbesondere die Abhängigkeit des aktuellen Betriebszustandes von der erzeugten Strömung. Von dem wenigstens einen Drehbewegungsparameter unabhängige, konstante Anteile sind ebenfalls unerheblich für die Bewertung des Lagerzustandes und können unberücksichtigt bleiben.

Bei einem Ausführungsbeispiel wird bei einer vorgegebenen Drehbewegung die Leistungsaufnahme des Elektromotors basierend auf dem wenigstens einen Leistungsparameter ermittelt und ausgewertet. Die Drehbewegung der Rotoranordnung kann dabei eine konstante Drehung sein. Anhand der für die Aufrechterhaltung der Drehbewegung erforderlichen Leistung des Elektromotors kann auf den Zustand der Lageranordnung geschlossen werden.

Zusätzlich oder alternativ kann bei einer vorgegebenen Leistungsaufnahme des Elektromotors die Drehbewegung der Rotoranordnung basierend auf dem wenigstens einen Drehbewegungsparameter ermittelt und ausgewertet werden. Beispielsweise kann hierbei die dem Elektromotor bereitgestellte Leistung konstant sein. Bei einem Ausführungsbeispiel kann die dem Elektromotor zugeführte Leistung ausgehend vom aktuellen Betriebszustand reduziert werden, beispielsweise bis auf Null, und die sich dadurch einstellende Änderung der Drehbewegung ermittelt und ausgewertet werden. Die Drehbewegungsänderung hängt hierbei vom Lagerzustand ab, so dass dieser basierend auf der Drehbewegungsänderung ermittelt werden kann.

Bei einem weiteren Ausführungsbeispiel kann eine Zeitdauer ermittelt und ausgewertet werden, die benötigt wird, um bei einer vorgegebenen Leistung des Elektromotors eine vorgegebene Drehbewegungsänderung, insbesondere Drehzahländerung, der Rotoranordnung zu erreichen. Dabei kann die Drehbewegung beispielsweise zwischen zwei vorgegebenen Drehzahlzuständen geändert werden. Die Drehzahl kann hierbei erhöht oder verringert werden.

Allgemein ausgedrückt, kann die Rotationsvorrichtung bei einer bekannten, insbesondere vorgegebenen Leistungsaufnahme des Elektromotors die sich dadurch einstellende Drehbewegung der Rotoranordnung basierend auf dem wenigstens einen Drehbewegungsparameter ermitteln und auswerten oder alternativ bei einer bekannten, insbesondere vorgegebenen Drehbewegung der Rotoranordnung die hierfür benötigte Leistungsaufnahme des Elektromotors basierend auf dem wenigstens einen Leistungsparameter ermitteln und auswerten. Bei beiden Alternativen kann daraus der Zustand der Lageranordnung ermittelt werden.

Die Rotationsvorrichtung kann eine Motorsteuerung aufweisen, die zur Steuerung und/oder Regelung mit dem Elektromotor verbunden ist, insbesondere durch eine elektrische Verbindung. Vorzugsweise ist die Motorsteuerung elektrisch mit den Statorwicklungen des Stators des Elektromotors verbunden, insbesondere um ein räumlich um die Drehachse herum variierendes, sozusagen umlaufendes Statormagnetfeld bzw. Statordrehfeld zu erzeugen.

Vorzugsweise ist die Motorsteuerung derart ausgebildet, dass die Drehbewegung des Elektromotors, insbesondere die Drehzahl des Elektromotors im Normalbetrieb der Rotationsvorrichtung geregelt ist. Innerhalb eines Prüfbetriebs, während eines Ermittlungszeitraums zur Ermittlung des wenigstens eines aktuellen Drehbewegungsparameters und des wenigstens einen aktuellen Leistungsparameters, kann optional die Drehzahlregelung temporär deaktiviert sein, beispielsweise um die Leistungsaufnahme des Elektromotors vorzugeben.

Bei dem Elektromotor handelt es sich beispielsweise um einen bürstenlosen Gleichstrommotor (BLDC).

Die Motorsteuerung und die Auswerteeinrichtung können als gemeinsame Recheneinrichtung ausgeführt sein oder als separate, kommunikationsverbundene Einheiten. Die Ermittlungseinrichtung kann optional eine Recheneinheit aufweisen, wenn wenigstens ein Parameter rechnerisch ermittelt werden soll. In diesem Fall kann zumindest der als Recheneinheit ausgebildete Teil der Ermittlungseinrichtung Bestandteil der Motorsteuerung und/oder der Auswerteeinrichtung sein oder mit der Motorsteuerung und/oder der Auswerteeinrichtung kommunikationsverbunden sein. Die Ermittlungseinrichtung kann einen oder mehrere Sensoren aufweisen, die mit der Motorsteuerung und/oder der Auswerteeinrichtung mittelbar oder unmittelbar kommunikationsverbunden sind.

Die Ermittlungseinrichtung kann zusätzlich zu dem wenigstens einen Drehbewegungsparameter und dem wenigstens einen Leistungsparameter irgendeinen der nachfolgend genannten weiteren Parameter oder mehrere der nachfolgend genannten Parameter in beliebiger Kombination ermitteln:

- einen Vibrationsparameter, der eine Vibration an einem nicht drehend gelagerten Bestandteil der Rotationsvorrichtung beschreibt,
- einen Geräuschparameter, der ein während der Drehbewegung der Rotoranordnung erzeugtes Geräusch beschreibt,
- einen Temperaturparameter, der eine Temperatur an einem Bestandteil der Rotationsvorrichtung beschreibt, insbesondere an einem nicht drehend gelagerten Bestandteil der Rotationsvorrichtung,
- einen Umgebungsparameter, der den Zustand einer umgebenden Atmosphäre Beschreibt, zum Beispiel eine Umgebungstemperatur, einen atmosphärischen Druck in der Umgebung, eine Feuchtigkeit der Atmosphäre in der Umgebung, etc.
- einen Lastparameter, der eine mechanische Last am Rotor des Elektromotors beschreibt, beispielsweise einen stromabwärts erzeugten Druck im Strömungspfad der erzeugten Fluidströmung.

Der Vibrationsparameter kann beispielsweise über einen Beschleunigungssensor erfasst werden. Der Geräuschparameter kann beispielsweise mittels eines Mikrofons erfasst werden. Der Temperaturparameter kann beispielsweise mittels eines Temperatursensors erfasst werden.

Der Lastparameter kann beispielsweise mittels eines Drucksensors stromabwärts der Rotoranordnung erfasst werden, wenn die Rotationsvorrichtung eine Strömungserzeugungsvorrichtung ist. Er kann alternativ oder zusätzlich durch einen Drehmomentsensor an der Rotoranordnung ermittelt werden. Einer dieser Sensoren kann bzw. mehrere dieser Sensoren können Bestandteil der Ermittlungseinrichtung sein.

Zusätzlich oder alternativ kann die Ermittlungseinrichtung weitere Sensoren aufweisen, beispielsweise ein Drucksensor stromaufwärts der Rotoranordnung im Falle einer Ausführung der Rotationsvorrichtung als Strömungserzeugungsvorrichtung, ein oder mehrere Sensoren, die die Atmosphäre in der Umgebung erfassen (atmosphärischer Druck, Atmosphärentemperatur, Atmosphärenfeuchtigkeit, usw.). Zusätzlich oder alternativ kann die Ermittlungseinrichtung auch einen aktuellen Zustand einer oder mehrerer weiterer Komponenten einer Anlage oder Maschine erfassen, deren Bestandteil die Rotationsvorrichtung ist.

Das erfindungsgemäße Verfahren kann insbesondere unter Verwendung irgendeiner vorstehend beschriebenen Ausführungsform der Rotationsvorrichtung und insbesondere der Strömungserzeugungsvorrichtung ausgeführt werden.

Vorteilhafte Ausgestaltungen der Erfindung ergeben sich aus den abhängigen Ansprüchen, der Beschreibung und der Zeichnung. Nachfolgend werden anhand der beigefügten Zeichnung bevorzugte Ausführungsbeispiele der Erfindung im Einzelnen erläutert. In der Zeichnung zeigen:

Figur 1 ein Blockschaltbild eines Ausführungsbeispiels einer Rotationsvorrichtung, die als Strömungserzeugungsvorrichtung ausgebildet ist,

Figur 2 eine schematische Prinzipdarstellung eines Strömungserzeugers der Strömungserzeugungsvorrichtung aus Figur 1,

Figur 3 eine schematische Prinzipdarstellung der Ermittlung einer Leistung-Drehbewegung-Korrelation, die die Abhängigkeit einer Leistung eines Elektromotors der Rotationsvorrichtung von einer Drehbewegung einer Rotoranordnung um eine Drehachse angibt,

Figur 4 eine schematische, blockschaltbildähnliche Darstellung eines Ausführungsbeispiels zur Auswertung der ermittelten Leistung-Drehbewegung-Korrelation aus Figur 3 basierend auf einem Koeffizientenvergleich,

Figuren 5 und 6 jeweils ein Flussdiagramm eines Ausführungsbeispiels eines erfindungsgemäßen Verfahrens.

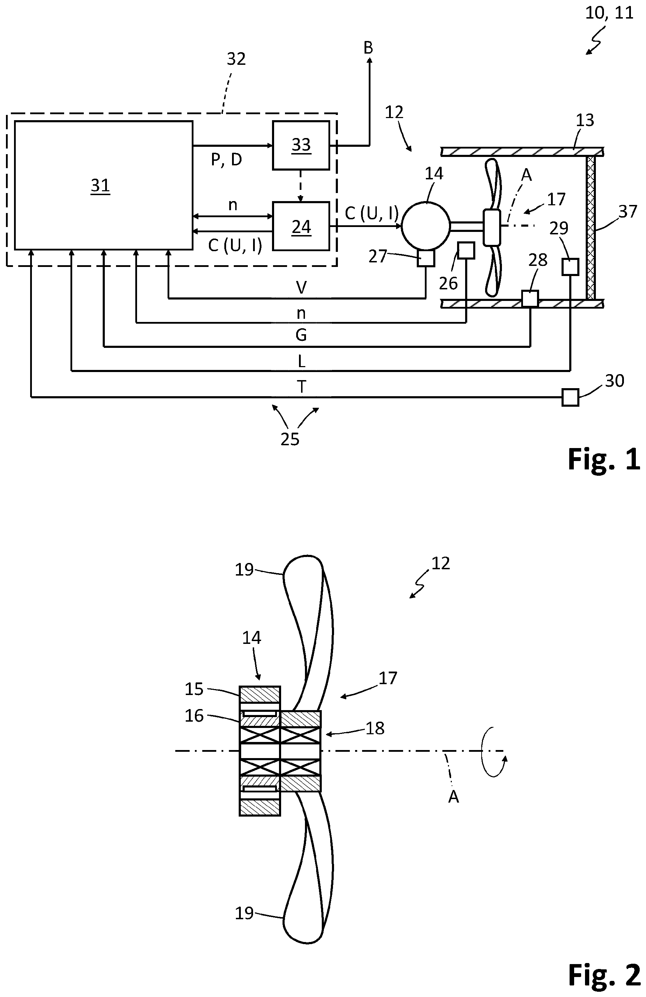

Figur 1 zeigt ein Blockschaltbild eines Ausführungsbeispiels einer Rotationsvorrichtung 10, die beispielsgemäß als Strömungserzeugungsvorrichtung 11 ausgeführt ist. Die Strömungserzeugungsvorrichtung 11 hat wenigstens einen Strömungserzeuger zur Erzeugung einer Fluidströmung. Bei dem hier beschriebenen Ausführungsbeispiel ist der Strömungserzeuger von einem Ventilator 12 zur Erzeugung einer Luftströmung in einem Strömungskanal 13 gebildet. Die Strömungserzeugungsvorrichtung 11 kann mehrere Strömungserzeuger und beispielsgemäß mehrere Ventilatoren 12 aufweisen.

Jeder Strömungserzeuger (hier: Ventilator 12) hat einen Elektromotor 14 mit einem Stator 15 und einem Rotor 16 (Figur 2). Der Rotor 16 ist Bestandteil einer Rotoranordnung 17 der Rotationsvorrichtung 10, beispielsgemäß der Strömungserzeugungsvorrichtung 11 bzw. des wenigstens einen Strömungserzeugers (hier: Ventilator 12). Die Rotoranordnung 17 ist mittels einer Lageranordnung 18 drehbar um eine Drehachse A gelagert. Die Rotoranordnung 17 hat beim Ausführungsbeispiel ein Ventilatorrad und/oder mehrere Ventilatorschaufeln 19, die mittelbar oder unmittelbar drehfest mit dem Rotor 16 des Elektromotors 14 verbunden sind. Bei einer Drehung der Rotoranordnung 17 um die Drehachse A erzeugen die Ventilatorschaufeln 19 des Ventilators 12 eine Gasströmung, beispielsweise eine Luftströmung im Strömungskanal 13. Alternativ zum veranschaulichten Ausführungsbeispiel könnten die Ventilatorschaufeln 19 auch anderweitig mit dem Rotor 16 des Elektromotors 14 antriebsverbunden sein. Bevorzugt drehen sich sämtliche Bestandteile der Rotoranordnung 17 um eine gemeinsame Drehachse A.

Der Elektromotor kann beim Ausführungsbeispiel als bürstenloser Gleichstrommotor (BLDC) ausgeführt sein.

Die Lageranordnung 18 weist wenigstens ein Drehlager auf, das als Wälzkörperlager ausgebildet ist. Als Wälzkörper können zylindrische Körper oder Kugeln verwendet werden.

Der Elektromotor 14 wird durch eine Motorsteuerung 24 gesteuert. Die Motorsteuerung gibt hierzu wenigstens einen Motorsteuerparameter C vor, beispielsweise eine Motorspannung U und/oder einen Motorstrom I. Bei dem hier veranschaulichten Ausführungsbeispiel ist der Elektromotor 14 drehzahlgeregelt. Die Drehzahl n des Rotors 16 des Elektromotors 14 und mithin die Drehzahl n der Rotoranordnung 17 kann durch einen geeigneten Motorsteuerparameter C eingestellt werden, beispielsweise über ein um die Drehachse A rotierendes Statormagnetfeld, das mittels die Drehachse A verteilt angeordnete Statorwicklungen des Stators 15 erzeugt wird. Die Motorsteuerung 24 kann hierzu beispielsweise einen Frequenzumrichter aufweisen.

Die Rotationsvorrichtung 10 bzw. Strömungserzeugungsvorrichtung 11 weist eine Ermittlungseinrichtung 25 auf. Die Ermittlungseinrichtung 25 ist dazu eingerichtet, Parameter zu ermitteln, die den aktuellen Betriebszustand der Rotationsvorrichtung 10 bzw. Strömungserzeugungsvorrichtung 11 und optional zusätzlich einen Umgebungszustand charakterisieren.

Die Ermittlungseinrichtung 25 weist beim Ausführungsbeispiel hierfür einen oder mehrere Sensoren auf. Die Anzahl der Sensoren und der wenigstens eine sensorisch erfasste Parameter können abhängig vom Ausführungsbeispiel variieren. Beispielsgemäß hat die Ermittlungseinrichtung 25 einen Drehzahlsensor 26 zur Erfassung einer Drehzahl des Rotors 16 des Elektromotors 14, die vorzugsweise mit der Drehzahl n der Rotoranordnung 17 übereinstimmt. Der Drehzahlsensor 26 kann Bestandteil des Elektromotors 14 sein oder auch einem anderen Bestandteil der Rotoranordnung 17 zugeordnet sein. Zusätzlich oder alternativ zum Drehzahlsensor 26 kann auch ein Drehmomentsensor verwendet werden.

Anstatt eines physischen Drehzahlsensors 26 kann auch ein als Software realisiertes Verfahren zur Ermittlung der Drehzahl verwendet werden, beispielsweise ein Beobachter. Der Drehzahlsensor kann somit ausschließlich als Hardwarekomponente oder als Softwarekomponente oder einer Kombination aus Hardware- und Softwarekomponente realisiert sein.

In Abwandlung zum dargestellten Ausführungsbeispiel kann anstelle einer drehfesten Antriebsverbindung zwischen dem Rotor 16 und den weiteren Bestandteilen der Rotoranordnung 17 (insbesondere Ventilatorrad bzw. Ventilatorschaufeln 19) auch eine Antriebsverbindung mit einem Getriebe und/oder einer anderen Kopplungseinheit realisiert werden, beispielsweise wenn die Antriebsverbindung ein anderes Übersetzungsverhältnis als 1:1 bereitstellen soll und/oder wenn die Drehachse des Rotors 17 und die Drehachse der weiteren Bestandteilen der Rotoranordnung 17 nicht entlang einer gemeinsamen Geraden angeordnet sein sollen.

Zur Erfassung von Vibrationen oder Schwingungen in Form eines Vibrationsparameters V ist ein Beschleunigungssensor 27 oder ein anderer geeigneter Schwingungssensor vorhanden. Der Beschleunigungssensor 27 ist beispielsgemäß einem nicht drehend gelagerten Bestandteil des Ventilators 12 zugeordnet. Mittels eines Schallsensors, beispielsgemäß eines Mikrofons 28, wird ein Geräuschparameter G erfasst, der das Geräusch bei einer Drehung der Rotoranordnung 17 um die Drehachse A charakterisiert, beispielsweise die beinhalteten Frequenzen und/oder Geräuschpegel.

Über einen Drucksensor 29 wird stromabwärts des Ventilators 12 im Strömungskanal 13 ein Gasdruck bzw. Luftdruck erfasst, der beim Ausführungsbeispiel einen Lastparameter L darstellt. Zusätzlich oder alternativ kann auch der Druck stromaufwärts des Ventilators 12 erfasst werden.

Außerdem ist beispielsgemäß wenigstens ein Umgebungssensor vorhanden, der hier beispielhaft durch einen Temperatursensor 30 zur Erfassung eines Temperaturparameters T der umgebenden Atmosphäre ausgeführt ist. Zusätzlich oder alternativ zum Temperatursensor 30 können auch ein Feuchtigkeitssensor zur Erfassung der Feuchtigkeit der umgebenden Atmosphäre oder ein Drucksensor zur Erfassung des Drucks der umgebenden Atmosphäre außerhalb des Strömungskanals 13 vorhanden sein.

Generell ist die Anzahl und die Art der vorhandenen Sensoren anwendungsabhängig veränderbar.

Zusätzlich oder alternativ zu dem wenigstens einen Sensor kann die Ermittlungseinrichtung 25 eine Recheneinheit 31 aufweisen, beispielsweise einen Mikroprozessor. Mittels der Recheneinheit 31 kann die Ermittlungseinrichtung 25 einen oder mehrere Parameter rechnerisch ermitteln. Die Recheneinheit 31 ist vorzugsweise mit der Motorsteuerung 24 kommunikationsverbunden oder die Recheneinheit 31 und die Motorsteuerung 24 sind gemeinsam Bestandteil einer Recheneinrichtung 32, wie es in Figur 1 schematisch gestrichelt dargestellt ist.

Bei dem in Figur 1 dargestellten Ausführungsbeispiel sind die Sensoren 26 bis 30 der Ermittlungseinrichtung 25 mit der Recheneinheit 31 der Ermittlungseinrichtung 25 kommunikationsverbunden. Alternativ oder zusätzlich kann zumindest einer der Sensoren 26 bis 30, beispielsweise der Drehzahlsensor 26, unmittelbar mit der Motorsteuerung 24 kommunikationsverbunden sein. Ein in der Motorsteuerung 24 benötigtes Sensorsignal kann somit unmittelbar oder mittelbar über die Recheneinheit 31 an die Motorsteuerung 24 weitergeleitet werden.

Die Ermittlungseinrichtung 25 ist dazu eingerichtet, zumindest einen aktuellen Drehbewegungsparameter D und zumindest einen aktuellen Leistungsparameter P zu ermitteln. Der aktuelle Drehbewegungsparameter D beschreibt eine aktuelle Drehbewegung der Rotoranordnung 17 bzw. des Rotors 16 um die Drehachse A, wie z.B. die Drehzahl n und/oder eine Winkelgeschwindigkeit. Bei dem hier veranschaulichten Ausführungsbeispiel wird die Drehzahl n als Drehbewegungsparameter D verwendet.

Der aktuelle Leistungsparameter P beschreibt eine aktuelle Leistung des Elektromotors 14, beispielsgemäß eine elektrische Leistung. Die Leistung kann beispielsweise durch die eingestellte Motorspannung U und den eingestellten Motorstrom I ermittelt werden. Als Leistungsparameter P kann zusätzlich oder alternativ auch das Drehmoment M des Elektromotors 14 verwendet werden. In der Motorsteuerung 24 vorhandene Motorsteuerparameter C, wie etwa die Motorspannung U und/oder der Motorstrom I, können der Ermittlungseinrichtung 25 zur Ermittlung des wenigstens einen Leistungsparameters P bereitgestellt werden.

Generell kann als Drehbewegungsparameter D irgendeiner der nachfolgenden oder mehrerer der nachfolgenden Parameter in beliebiger Kombination verwendet werden:

- die Drehzahl n,
- eine Winkelgeschwindigkeit der Rotoranordnung 17,
- eine durch die Drehbewegung des Rotors 16 in den Statorwicklungen des Stators 17 induzierte Gegenspannung oder elektromagnetische Kraft (EMK),
- eine Umlaufgeschwindigkeit oder Frequenz oder andere geeignete Größe zur Beschreibung des sich räumlich um die Drehachse A ändernden Statormagnetfeldes des Stators 17 (Statordrehfeld),
- irgendein von der Motorsteuerung 24 eingestellter Motorsteuerparameter C zur Drehbewegungssteuerung des Rotors 16.

Wie erläutert, kann als Leistungsparameter P irgendeiner der nachfolgenden Parameter oder eine beliebige Kombination der nachfolgend genannten Parameter verwendet werden:

- die Motorspannung U des Elektromotors 14,
- der Motorstrom I des Elektromotors 14,
- die elektrische Leistung des Elektromotors 14,
- das Drehmoment M oder ein anderer die elektrische oder mechanische Leistung des Elektromotors 14 beschreibender Parameter,
- ein Motorsteuerparameter C der Motorsteuerung 24, der zur Einstellung der Leistung des Elektromotors 14 verwendet wird, wie z.B. ein Tastgrad (duty cycle) des Motorstroms I und/oder der Motorspannung U.

Der wenigstens eine Leistungsparameter P und der wenigstens eine Drehbewegungsparameter D können sensorisch, rechnerisch, mittels eines Beobachters oder auf andere geeignete Weise durch die Ermittlungseinrichtung 25 ermittelt werden.

Die Rotationsvorrichtung 10 und beispielsgemäß die Strömungserzeugungsvorrichtung 11 hat außerdem eine Auswerteeinrichtung 33, die gemeinsam mit der Motorsteuerung 24 und/oder der Recheneinheit 31 Bestandteil der Recheneinrichtung 32 sein kann. Die Auswerteeinrichtung 33 ist alternativ separat ausgebildet und zumindest mit der Ermittlungseinrichtung 25 und alternativ zusätzlich mit der Motorsteuerung 24 kommunikationsverbunden. Insbesondere bilden die Auswerteeinrichtung 33 und - sofern vorhanden - die Recheneinheit 31 der Ermittlungseinrichtung 25 eine gemeinsame Einheit. Ein rechnerisches Ermitteln eines Parameters und die Auswertung wenigstens eines Parameters können funktionell in einem gemeinsamen Verfahrensablauf integriert sein.

Die Auswerteeinrichtung 33 ist dazu eingerichtet, unter Verwendung des wenigstens einen aktuellen Leistungsparameters P und des wenigstens einen aktuellen Drehbewegungsparameters D einen Zustandsparameter B zu ermitteln, der den Zustand der Lageranordnung 18 charakterisiert. Hierzu wird beispielsgemäß ein Bezug bzw. eine Korrelation zwischen der aktuellen Leistung des Elektromotors 14, die durch den wenigstens einen Leistungsparameter P beschrieben wird, und der aktuellen Drehbewegung der Rotoranordnung 17, die durch den wenigstens einen Drehbewegungsparameter D beschrieben wird, hergestellt.

Die Leistung des Elektromotors 14, die zur Erzeugung einer bestimmten Drehbewegung oder Drehbewegungsänderung erforderlich ist, hängt unter anderem vom Zustand der Lageranordnung 18 ab. Insbesondere wird zur Ermittlung des Lagerzustands während eines Ermittlungszeitraumes Δt (kann als Prüfzustand der Rotationsvorrichtung 10 bezeichnet werden) eine Ermittlung des wenigstens einen aktuellen Leistungsparameters P und des wenigstens einen aktuellen Drehbewegungsparameters D zur Prüfung des Lagerzustandes der Lageranordnung 18 vorgenommen. Innerhalb des Ermittlungszeitraumes Δt wird dabei vorzugsweise ein zeitlich nicht stationärer Betrieb des Elektromotors 14 veranlasst, beispielsweise indem die Drehbewegung und/oder die dem Elektromotor 14 bereitgestellte elektrische Leistung variiert wird bzw. werden. Zum Beispiel kann die dem Elektromotor 14 zugeführte Leistung bekannt sein oder vorgegeben werden und die sich ergebende Drehzahl n im Ermittlungszeitraum Δt ermittelt werden - oder es kann die Drehzahl n bekannt sein oder vorgegeben werden und die vom Elektromotor 14 aufgenommene oder erzeugte Leistung im Ermittlungszeitraum Δt ermittelt werden. Dabei können beispielsweise folgende Prüfzustände der Rotationsvorrichtung 10 im Ermittlungszeitraum Δt verwendet werden:

1) Im Ermittlungszeitraum Δt kann die elektrische Leistung erhöht oder verringert werden und die sich dadurch ergebende Änderung der Drehbewegung ermittelt werden.

2) Im Ermittlungszeitraum Δt kann wenigstens eine Drehzahländerung (Erhöhung und/oder Verringerung - beispielsweise von einer Ausgangsdrehzahl zu einer Zieldrehzahl) vorgegeben werden und die hierfür erforderliche Leistungsänderung ermittelt werden.

3) Eine Zeitdauer zur Veränderung einer Drehbewegung (z.B. Erhöhung oder Verringerung der Drehzahl) bei einer bekannten oder vorgegebenen Leistung kann ermittelt und ausgewertet werden.

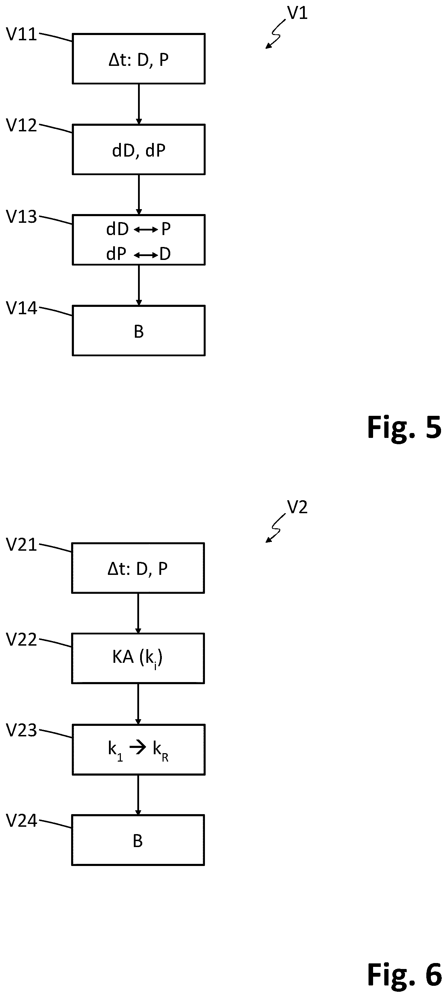

Hierzu ist beispielhaft in Figur 5 ein erstes Ausführungsbeispiel eines erfindungsgemäßen Verfahrens veranschaulicht, das als erstes Verfahren V1 bezeichnet wird. In einem ersten Verfahrensschritt V11 dieses ersten Verfahrens V1 werden mittels der Ermittlungseinrichtung 25 der wenigstens eine Drehbewegungsparameter D und der wenigstens eine Leistungsparameter P ermittelt im Ermittlungszeitraum Δt ermittelt. Während des Ermittlungszeitraumes Δt wird (i) bei einer bekannten (konstanten oder sich zeitlich ändernden) Leistung, die sich dabei ergebende, zeitlich ändernde Drehbewegung ermittelt und/oder (ii) bei einer bekannten (konstanten oder sich zeitlich ändernden) Drehbewegung, die sich dabei ergebende, zeitlich ändernde Leistung ermittelt. Wie erläutert wird die aktuelle Leistung des Elektromotors 14 im Ermittlungszeitraum Δt durch den wenigstens einen Leistungsparameter P und die aktuelle Drehbewegung der Rotoranordnung 17 im Ermittlungszeitraum Δt durch den wenigstens einen Drehbewegungsparameter D ermittelt und angegeben.

In einem zweiten Verfahrensschritt V12 des ersten Verfahrens V1 erfolgt beispielsgemäß eine Vorverarbeitung der im Ermittlungszeitraum Δt erhaltenen Werte für den wenigstens einen Drehbewegungsparameter D und den wenigstens einen Leistungsparameter P. Dabei kann eine zeitliche Änderung dD der Drehbewegung und/oder eine zeitliche Änderung dP der Leistung des Elektromotors 14 ermittelt werden. Anschließend werden die ermittelten Parameter D, P und/oder deren zeitliche Änderungen dD, dP in einem dritten Verfahrensschritt V13 des ersten Verfahrens V1 ausgewertet, indem ein Zusammenhang zwischen dem jeweils vorgegebenen Parameter D, P und dem sich daraus ergebenden Parameter P bzw. D hergestellt wird, wie es vorstehend erläutert wurde. Schließlich kann in einem vierten Verfahrensschritt V14 des ersten Verfahrens V1 basierend darauf der Zustandsparameter B ermittelt werden, der den Zustand der Lageranordnung 18 beschreibt.

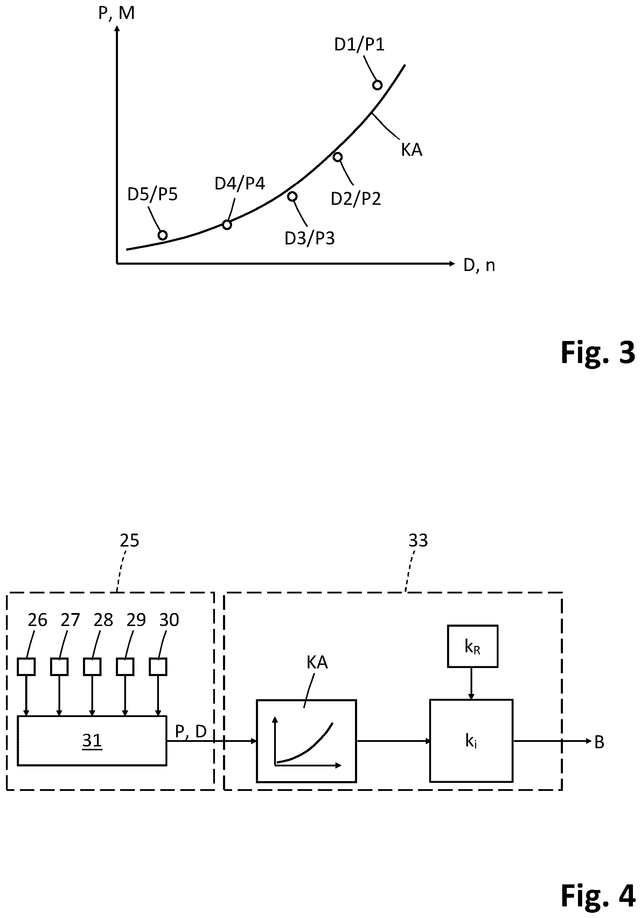

Anhand der Figuren 3, 4 und 6 wird im Folgenden ein weiteres Ausführungsbeispiel eines Verfahrens (im Folgenden als zweites Verfahren V2 bezeichnet) erläutert, um den Zustand der Lageranordnung 18 bzw. den Lagerzustandsparameter B zu ermitteln.

Zunächst wird während eines Ermittlungszeitraumes Δt durch die Ermittlungseinrichtung 25 zu mehreren aufeinanderfolgenden Zeitpunkten jeweils ein Drehbewegungsparameter D und ein zugeordneter Leistungsparameter P erfasst (erster Verfahrensschritt V21 des zweiten Verfahrens V2 in Figur 6). Aus den einzelnen Parameterwerten wird dann rechnerisch und/oder durch Approximation eine Leistung-Drehbewegung-Korrelation KA ermittelt, wie sie beispielhaft in Figur 3 dargestellt ist (zweiter Verfahrensschritt V22 des zweiten Verfahrens V2 in Figur 6). Beispielsweise kann hierbei der Leistungsparameter P abhängig von einem Drehbewegungsparameter D entsprechend der folgenden Polynomfunktion des Grades n ermittelt werden:

**EP 4 682 387 A1**

$$P = k_0 + k_1 \cdot D + k_2 \cdot D^2 + \cdots + k_n \cdot D^n \qquad (1)$$

Die Polynomfunktion gemäß Gleichung (1) weist die aktuellen Koeffizienten $k_i$ auf, die anhand der ermittelten Werte für den Leistungsparameter P und den Drehbewegungsparameter D ermittelt werden können. Abhängig vom Grad n der Polynomfunktion müssen entsprechend viele Messungen bzw. Ermittlungen für den Drehbewegungsparameter D und den Leistungsparameter P im Ermittlungszeitraum $\Delta t$ durchgeführt werden.

Durch eine Approximation (z.B. "Polynomfitting") kann dann die aktuelle Leistung-Drehbewegung-Korrelation KA ermittelt werden. Hierbei können irgendwelche bekannten Approximationsverfahren verwendet werden, wie z.B. die Methode der kleinsten Fehlerquadrate oder Ähnliches.

Vorzugsweise hat die ermittelte Polynomfunktion bzw. die ermittelte aktuelle Leistung-Drehbewegung-Korrelation KA mindestens den Grad 2 (d.h. $n{\geq}2$). Eine Funktion zweiten Grades (n=2) ist ausreichend.

Wie es schematisch in Figur 4 veranschaulicht ist, wird zumindest einer der ermittelten Koeffizienten $k_i$ mit einem Referenzkoeffizienten $k_R$ verglichen (dritter Verfahrensschritt V23 des zweiten Verfahrens V2 in Figur 6). Bei diesem Vergleich können auch zwei oder mehr als zwei unterschiedlich große Referenzkoeffizienten $k_{Rm}$ (m=1 bis max) verwendet werden: $k_{R1} < k_{R2} < k_{R3} < \ldots < k_{Rmax2}$. Ein einziger Referenzkoeffizient $k_R$ ist im einfachsten Fall ausreichend und stellt somit einen Schwellenwert dar, um eine fehlerfreie Lageranordnung 18 von einer nicht ordnungsgemäß lagernden Lageranordnung 18 zu unterscheiden, die beispielsweise einen nicht akzeptablen Verschleißzustand, eine mangelhafte Schmierung oder einen Schaden aufweist.

Insbesondere wird im dritten Verfahrensschritt V23 dieses zweiten Verfahrens V2 der Koeffizient $k_1$ zum Vergleich mit wenigstens einem Referenzkoeffizienten $k_R$ verwendet, der einen linearen Zusammenhang zwischen dem Leistungsparameter P und dem Drehbewegungsparameter D beschreibt. Beispielsweise kann hier ein linearer Zusammenhang zwischen dem Drehmoment M als Leistungsparameter P und der Drehzahl n als Drehbewegungsparameter D ausgewertet werden. Abhängig davon, ob der den linearen Anteil der Polynomfunktion beschreibende Koeffizient $k_1$ den Referenzkoeffizienten $k_R$ überschreitet oder nicht, ergibt sich ein Lagerzustandsparameter B, der eine ordnungsgemäß funktionierende Lageranordnung von einer nicht ordnungsgemäß funktionierenden Lageranordnung 18 unterscheidet und daher beispielsgemäß zwei Zustände annehmen kann (vierter Verfahrensschritt V24 des zweiten Verfahrens V2).

Werden mehrere Referenzkoeffizienten $k_{Rm}$ ($m{\geq}2$) verwendet, kann der Lagerzustandsparameter B entsprechend mehr als zwei verschiedene Zustände annehmen und unterscheiden, beispielsweise: (1) ordnungsgemäß funktionierende Lageranordnung, (2) Lageranordnung hat Wartungsbedarf, (3) defekte Lageranordnung, etc.

Die Rotationsvorrichtung 10 bzw. Strömungserzeugungsvorrichtung 11 und insbesondere die Auswerteeinrichtung 33 kann den ermittelten Zustandsparameter B der Lageranordnung 18 über eine geeignete Bedienschnittstelle für eine Bedienperson ausgeben oder eine übergeordnete bzw. externe Einrichtung übermitteln, wie z.B. einen zentralen Server oder eine Cloud.

Zusätzlich oder alternativ zu den vorstehend beschriebenen Varianten ist es auch möglich, dass bei der Ermittlung des Zustandsparameters B der Lageranordnung 18 Verfahren und/oder Vorrichtungen des maschinellen Lernens und/oder der künstlichen Intelligenz (KI) eingesetzt werden. Beispielsweise kann die Ermittlung des Zusammenhangs zwischen der Drehbewegung oder einer Drehbewegungsänderung und der Leistung bzw. einer Leistungsänderung des Elektromotors 14 mit Hilfe von Verfahren und Vorrichtungen der künstlichen Intelligenz und/oder des maschinellen Lernens ausgewertet und basierend darauf der Zustandsparameter B ermittelt werden. Bei einer solchen Vorgehensweise kann in der Auswerteeinrichtung 33 durch Trainingsdaten und/oder im Betrieb der Rotationsvorrichtung 10 gelernt werden, wann die Lageranordnung 18 einen ordnungsgemäßen bzw. einen nicht ordnungsgemäßen Zustand aufweist. Auch hier wird jeweils die Drehbewegung oder Drehbewegungsänderung in Verbindung gebracht mit der Leistung oder Leistungsänderung des Elektromotors 14 und daraus auf den Zustand des wenigstens einen Lagers der Lageranordnung 18 geschlossen. Beispielsweise können hierfür in der Auswerteeinrichtung 33 künstliche neuronale Netze, semantische Netze, Frames, Prädikatenlogik oder Stützvektorverfahren (Support Vector Machines, SVM) oder andere bekannte Einrichtungen verwendet werden. Das maschinelle Lernen kann überwachtes Lernen, nicht überwachtes Lernen oder bestärkendes Lernen sein. Es können Verfahren zur Mustererkennung, Musteranalyse oder Mustervorhersage im Rahmen des maschinellen Lernens verwendet werden.

Im Rahmen der Auswertung des wenigstens einen Drehbewegungsparameters D und/oder des wenigstens einen Leistungsparameters P durch die Auswerteeinrichtung 33 kann bei allen Ausführungsbeispielen optional auch weitere Parameter berücksichtigt werden, beispielsweise wenigstens ein den Lastzustand am Rotor 16 des Elektromotors 14 beschreibender Lastparameter und/oder wenigstens ein Umgebungsparameter der umgebenden Atmosphäre und/oder wenigstens ein Geräuschparameter beim Betrieb der Rotationsvorrichtung 10 und/oder wenigstens ein Vibrationsparameter beim Betrieb der Rotationsvorrichtung 10.

Die zur Erzielung einer bestimmten Drehbewegung des Rotors 16 erforderliche elektrische Leistung hängt auch von der Last bzw. der Arbeit ab, die die Rotoranordnung 17 und beispielsgemäß die Ventilatorschaufeln 19 zur Erzeugung der Gasströmung aufbringen müssen. Zum Beispiel kann im Strömungskanal 13 aufgrund von Einbaukomponenten, beispielsweise einem Filter 37, ein erhöhter Gegendruck entstehen, der abhängig vom Zustand des Strömungskanals 13 variieren kann. Der Filter 37 kann mit zunehmender Betriebsdauer verstopfen und den Strömungswiderstand erhöhen. Auch im Strömungskanal 13 vorhandene schaltbare oder einstellbare Klappen, Ventile oder dergleichen können die Last am Rotor 16 verändern. Deswegen kann optional der wenigstens eine Lastparameter L (beispielsgemäß der Druck im Strömungskanal 13 stromabwärts des Ventilators 12) berücksichtigt werden. Abhängig von der Anwendung kann der Lastparameter L auch Stellungen von Ventilen, Durchströmöffnungen, Klappen oder dergleichen angeben.

Umgebungseinflüsse, wie Temperatur, Feuchtigkeit oder dergleichen können die Rotationsvorrichtung und insbesondere den Elektromotor 14 beeinflussen, wie z.B. den elektrischen Widerstand in den Statorwicklungen. Solche Einflüsse können durch einen Temperaturparameter T berücksichtigt werden. Es ist zusätzlich oder alternativ möglich, dass der Temperaturparameter T die Temperatur unmittelbar am Elektromotor 14 bzw. am Stator 15 beschreibt (z.B. Temperatursensor am oder im Elektromotor 14).

Durch das Berücksichtigen von Vibrationen (Vibrationsparameter V) und/oder Geräuschen (Geräuschparameter G) kann die Genauigkeit der Auswertung weiter verbessert werden, beispielsweise um externe Einflüsse oder Beschädigungen außerhalb der Lageranordnung 18 zu erfassen und von einer nicht ordnungsgemäßen Lagerung unterscheiden zu können. So kann beispielsweise eine Geräuschmessung im Bereich des Strömungskanals 13 einen Schaden an einer drehenden Komponente der Rotoranordnung 17 (z.B. Ventilatorschaufeln 19) oder einen schleifenden Kontakt von einem drehenden Teil der Rotoranordnung 17 an einem umgebenden Teil der Anlage (z.B. Strömungskanal 13) angeben. Mittels des Vibrationsparameters V kann zum Beispiel ein zusätzlicher Parameter zur Verfügung stehen, um eine nicht ordnungsgemäße Lagerung durch die Lageranordnung 18 von äußeren Einwirkungen besser unterscheiden zu können.

Die Ermittlungseinrichtung 25 und die Auswerteeinrichtung 33 sind beim Ausführungsbeispiel Bestandteil der Recheneinrichtung 32. Alternativ hierzu könnte die Recheneinheit 31 und/oder die Auswerteeinrichtung 33 auch mittels eines kommunikationsverbundenen zentralen Servers oder über einen Internetdienst (Cloud-Service) bereitgestellt werden.

Die Auswerteeinrichtung 33 kann bei irgendeinem der vorstehend beschriebenen Ausführungsbeispiele auch dazu eingerichtet sein, den wenigstens einen Drehbewegungsparameter im Frequenzbereich auszuwerten. Hierzu kann der wenigstens eine Drehbewegungsparameter D durch eine FourierTransformation (insbesondere FFT) in den Frequenzbereich transformiert werden und dort im Hinblick auf seine Anteile (Wert der Frequenz und/oder Betrag des Frequenzanteils) ausgewertet werden. Hierbei kann als Drehbewegungsparameter D vorzugsweise die durch die Drehung des Rotors 16 in den Statorwicklungen des Stators 17 erzeugte Gegenspannung oder elektromagnetische Kraft (EMK) verwendet werden. Auch eine Analyse von Oberschwingungen und/oder Wavelets (z.B. im Rahmen der Wavelet-Transformation) oder ähnliches können eingesetzt werden.

Die Erfindung betrifft eine Rotationsvorrichtung 10, insbesondere eine Strömungserzeugungsvorrichtung 11 sowie ein Verfahren V1, V2, die bzw. das dazu eingerichtet ist, einen Zustand einer Lageranordnung 18 der Rotationsvorrichtung 10 zu ermitteln. Die Lageranordnung 18 lagert einen Rotor 16 eines Elektromotors 14 und/oder eine den Rotor aufweisende Rotoranordnung 17 drehbar um eine Drehachse A. Es wird wenigstens ein Drehbewegungsparameter ermittelt, der die Drehbewegung um die Drehachse A beschreibt sowie wenigstens ein Leistungsparameter, der die Leistung des Elektromotors 14 beschreibt. Die Ermittlung des wenigstens einen Drehbewegungsparameters D und des wenigstens einen Leistungsparameters P erfolgt zu einem aktuellen Betrachtungszeitpunkt, insbesondere an wenigstens einem Betrachtungszeitpunkt in einem Ermittlungszeitraum Δt. Der wenigstens eine Drehbewegungsparameter D und der wenigstens eine Leistungsparameter P werden in Bezug zueinander ausgewertet und daraus ein Zustandsparameter B ermittelt, der den Zustand der Lageranordnung 18 beschreibt. Insbesondere wird hierfür ein linearer Anteil einer Leistung-Drehbewegung-Korrelation KA zwischen dem wenigstens einen aktuellen Drehbewegungsparameter D und dem wenigstens einen aktuellen Leistungsparameter P verwendet.

Bezugszeichenliste:

10    Rotationsvorrichtung

11    Strömungserzeugungsvorrichtung

12    Ventilator

13    Strömungskanal

| 14 | Elektromotor |
| 15 | Stator |
| 16 | Rotor |
| 17 | Rotoranordnung |
| 18 | Lageranordnung |
| 19 | Ventilatorschaufel |
| 24 | Motorsteuerung |
| 25 | Ermittlungseinrichtung |
| 26 | Drehzahlsensor |
| 27 | Beschleunigungssensor |
| 28 | Mikrofon |
| 29 | Drucksensor |
| 30 | Temperatursensor |
| 31 | Recheneinheit |
| 32 | Recheneinrichtung |
| 33 | Auswerteeinrichtung |
| 37 | Filter |

| $\Delta t$ | Ermittlungszeitraum |
| A | Drehachse |
| B | Zustandsparameter der Lageranordnung |
| C | Motorsteuerparameter |
| D | Drehbewegungsparameter |
| dD | zeitliche Änderung des Drehbewegungsparameters |
| dP | zeitliche Änderung des Leistungsparameters |
| G | Geräuschparameter |
| I | Motorstrom |
| KA | aktuelle Leistung-Drehbewegung-Korrelation |
| $k_i$ | Koeffizient der aktuellen Leistung-Drehbewegung-Korrelation (i=0, 1, 2, ..., n) |
| $k_R$ | Referenzkoeffizient |
| L | Lastparameter |
| M | Drehmoment |
| n | Drehzahl |
| P | Leistungsparameter |
| T | Temperaturparameter |
| U | Motorspannung |
| V | Vibrationsparameter |
| V1 | erstes Verfahren |
| V11 | erster Verfahrensschritt des ersten Verfahrens |
| V12 | zweiter Verfahrensschritt des ersten Verfahrens |
| V13 | dritter Verfahrensschritt des ersten Verfahrens |
| V14 | vierter Verfahrensschritt des ersten Verfahrens |

V2 zweites Verfahren
V21 erster Verfahrensschritt des zweiten Verfahrens
V22 zweiter Verfahrensschritt des zweiten Verfahrens
V23 dritter Verfahrensschritt des zweiten Verfahrens
V24 vierter Verfahrensschritt des zweiten Verfahrens

**Patentansprüche**

1. Rotationsvorrichtung (10), insbesondere Strömungserzeugungsvorrichtung (11), aufweisend:

   - einen Elektromotor (14) mit einem Stator (15) und mit einem Rotor (16),
   - eine den Rotor (16) aufweisende Rotoranordnung (17), die mittels einer Lageranordnung (18) drehbar um eine Drehachse (A) gelagert ist,
   - eine Ermittlungseinrichtung (25), die dazu eingerichtet ist wenigstens einen die aktuelle Drehbewegung der Rotoranordnung (17) beschreibenden Drehbewegungsparameter (D) und wenigstens einen die aktuelle Leistung des Elektromotors (14) beschreibenden Leistungsparameter (P) zu ermitteln,
   - eine Auswerteeinrichtung (33), die dazu eingerichtet ist, den wenigstens einen aktuellen Drehbewegungsparameter (D) und den wenigstens einen aktuellen Leistungsparameter (P) in Bezug zueinander auszuwerten daraus einen Zustand der Lageranordnung (18) zu ermitteln, wobei die Auswerteeinrichtung (33) außerdem dazu eingerichtet ist, für die Auswertung des wenigstens einen Drehbewegungsparameters (D) und des wenigstens einen Leistungsparameters (P) in Bezug zueinander wenigstens eine aktuelle Leistung-Drehbewegung-Korrelation (KA) zu ermitteln und auszuwerten, die einem Polynom mindestens zweiten Grades entspricht.

2. Rotationsvorrichtung nach Anspruch 1, wobei die aktuelle Leistung-Drehbewegung-Korrelation (KA) lineare und nicht-lineare Anteile aufweist.

3. Rotationsvorrichtung nach Anspruch 2, wobei die aktuelle Leistung-Drehbewegung-Korrelation (KA) einen linearen Koeffizienten ($k_1$) eines linearen Anteils zwischen der Drehbewegung der Rotoranordnung (17) und der Leistung des Elektromotors (14) angibt und der den Zustand der Lageranordnung (18) beschreibt.

4. Rotationsvorrichtung nach Anspruch 2 oder 3, wobei die aktuelle Leistung-Drehbewegung-Korrelation (KA) eine mathematische Funktion ist.

5. Rotationsvorrichtung nach einem der vorhergehenden Ansprüche, wobei die Auswerteeinrichtung (33) dazu eingerichtet ist, bei vorgegebener Drehbewegung der Rotoranordnung (17) die Leistungsaufnahme des Elektromotors (14) basierend auf dem wenigstens einen Leistungsparameter (P) zu ermitteln und auszuwerten.

6. Rotationsvorrichtung nach einem der vorhergehenden Ansprüche, wobei die Auswerteeinrichtung (33) dazu eingerichtet ist, bei vorgegebener Leistungsaufnahme des Elektromotors (14) die Drehbewegung der Rotoranordnung (17) basierend auf dem wenigstens einen Drehbewegungsparameter (D) zu ermitteln und auszuwerten.

7. Rotationsvorrichtung nach einem der vorhergehenden Ansprüche, wobei die Auswerteeinrichtung (33) dazu eingerichtet ist, bei vorgegebener Leistungsaufnahme des Elektromotors (14) eine Zeitdauer auszuwerten, um eine vorgegebene Drehzahländerung zu erreichen.

8. Rotationsvorrichtung nach einem der Ansprüche 5 bis 7, wobei die vorgegebene Drehbewegung des Elektromotors (14) eine konstante Drehzahl ist oder wobei die vorgegebener Leistungsaufnahme des Elektromotors (14) eine konstante Leistungsaufnahme ist.

9. Rotationsvorrichtung nach einem der vorhergehenden Ansprüche, außerdem aufweisend eine Motorsteuerung (24), die zur Steuerung und/oder Regelung elektrisch mit Elektromotor (14), insbesondere dem Stator (15), verbunden ist.

10. Rotationsvorrichtung nach Anspruch 9, wobei die Motorsteuerung (24) und die Auswerteeinrichtung (33) in einer gemeinsamen Recheneinrichtung (32) ausgeführt sind.

11. Rotationsvorrichtung nach einem der vorhergehenden Ansprüche, wobei die Ermittlungseinrichtung (25) dazu eingerichtet ist, wenigstens einen der nachfolgend genannten Parameter als Drehbewegungsparameter (D) zu ermitteln:

- eine Drehzahl (n) der Rotoranordnung (17),
- eine Winkelgeschwindigkeit der Rotoranordnung (17),
- eine durch die Drehbewegung des Rotors (16) des Elektromotors (14) induzierte elektromagnetische Kraft und/oder Spannung in einer Startorwicklung des Stators (15) des Elektromotors (14),
- einen die zeitliche und/oder räumliche Änderung eines Statormagnetfeldes des Stators (15) beschreibenden Magnetfeldparameter,
- einen zur Drehbewegungssteuerung des Rotors (16) des Elektromotors (14) verwendeten Motorsteuerparameter (C) .

12. Rotationsvorrichtung nach einem der vorhergehenden Ansprüche, wobei die Ermittlungseinrichtung (25) dazu eingerichtet ist, zusätzlich zum wenigstens einen Drehbewegungsparameter (D) und zusätzlich zum wenigstens einen Leistungsparameter (P) wenigstens einen der nachfolgend genannten Parameter zu ermitteln:

   - einen Vibrationsparameter (V), der eine Vibration an einem nicht drehend gelagerten Bestandteil der Rotationsvorrichtung (10) beschreibt,
   - einen Geräuschparameter (G), der ein während der Drehbewegung der Rotoranordnung (17) erzeugtes Geräusch beschreibt,
   - einen Temperaturparameter (T), der eine Temperatur an einem Bestandteil der Rotationsvorrichtung (10) beschreibt
   - eine Lastparameter, der eine mechanische Last am Rotor (16) des Elektromotors (14) beschreibt.

13. Rotationsvorrichtung nach einem der vorhergehenden Ansprüche, wobei die Ermittlungseinrichtung (25) dazu eingerichtet ist, wenigstens einen der nachfolgend genannten Parameter als Leistungsparameter (P) zu ermitteln:

   - eine Motorspannung (U) des Elektromotors (14),
   - eine Motorstrom (I) des Elektromotors (14),
   - eine elektrische Leistung des Elektromotors (14),
   - ein Drehmoment (M) des Elektromotors (14),
   - einen zur Leistungssteuerung des Elektromotors (14) verwendeten Motorsteuerparameter (C).

14. Verfahren zur Ermittlung eines Zustands einer Lageranordnung (18) einer Rotationsvorrichtung (10), insbesondere einer Strömungserzeugungsvorrichtung (11), mit einem einen Stator (15) und einen Rotor (16) aufweisenden Elektromotor (14), mit einer den Rotor (16) aufweisenden Rotoranordnung (17), die mittels der Lageranordnung (18) drehbar um eine Drehachse (A) gelagert ist, wobei das Verfahren aufweist:

   - Ermitteln wenigstens eines die aktuelle Drehbewegung der Rotoranordnung (17) beschreibenden Drehbewegungsparameters (D) und wenigstens eines die aktuelle Leistung des Elektromotors (14) beschreibenden Leistungsparameters (P),
   - Auswerten des wenigstens einen aktuellen Drehbewegungsparameters (D) und des wenigstens einen aktuellen Leistungsparameters (P) in Bezug zueinander, wobei daraus der Zustand der Lageranordnung (18) ermittelt wird.

**Fig. 1**

**Fig. 2**

P, M

D1/P1

KA

D5/P5

D4/P4

D2/P2

D3/P3

D, n

**Fig. 3**

25

33

26  27  28  29  30

31

P, D

KA

$k_R$

$k_i$

B

**Fig. 4**

V1

V11 — Δt: D, P

V12 — dD, dP

V13 — dD ⟷ P
      dP ⟷ D

V14 — B

**Fig. 5**

V2

V21 — Δt: D, P

V22 — KA ($k_i$)

V23 — $k_1 \rightarrow k_R$

V24 — B

**Fig. 6**

**EUROPÄISCHER RECHERCHENBERICHT**

Nummer der Anmeldung

EP 25 18 8838

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | "Method of Adaptive Fan Performance Learning to Predict Future Failures ED - Darl Kuhn", IP.COM, IP.COM INC., WEST HENRIETTA, NY, US, 16. August 2013 (2013-08-16), XP013158683, ISSN: 1533-0001 | 14 | INV. F04D25/08 F04D27/00 F04D29/056 |
| A | * das ganze Dokument * ----- | 1-13 | |
| X | GB 2 589 072 A (GEOLA TECH LTD [GB]) 26. Mai 2021 (2021-05-26) | 14 | |
| A | * Seite 9, Zeilen 27-29 * ----- | 1-13 | |
| X | US 5 621 159 A (BROWN ALAN E [US] ET AL) 15. April 1997 (1997-04-15) | 14 | |
| A | * Spalte 2, Zeilen 37-56 * * Spalte 3, Zeilen 1-16 * * Spalte 3, Zeilen 17-32 * ----- | 1-13 | |
| X | US 2024/093692 A1 (HAYLOCK JAMES ALEXANDER [GB] ET AL) 21. März 2024 (2024-03-21) | 14 | RECHERCHIERTE SACHGEBIETE (IPC) |
| A | * Absätze [0020], [0021], [0037], [0048] * ----- | 1-13 | F04D |

Der vorliegende Recherchenbericht wurde für alle Patentansprüche erstellt

| Recherchenort | Abschlußdatum der Recherche | Prüfer |
|---|---|---|
| Den Haag | 8. Dezember 2025 | Brouillet, Bernard |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes Dokument

EPO FORM 1503 03.82 (P04C03)

**EP 4 682 387 A1**

## ANHANG ZUM EUROPÄISCHEN RECHERCHENBERICHT
## ÜBER DIE EUROPÄISCHE PATENTANMELDUNG NR.

EP 25 18 8838

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-12-2025

| Im Recherchenbericht angeführtes Patentdokument | Datum der Veröffentlichung | Mitglied(er) der Patentfamilie | Datum der Veröffentlichung |
|---|---|---|---|
| GB 2589072 A | 26-05-2021 | KEINE | |
| US 5621159 A | 15-04-1997 | KEINE | |
| US 2024093692 A1 | 21-03-2024 | CN 116710658 A | 05-09-2023 |
| | | EP 4264057 A1 | 25-10-2023 |
| | | GB 2602038 A | 22-06-2022 |
| | | JP 2024502738 A | 23-01-2024 |
| | | US 2024093692 A1 | 21-03-2024 |
| | | WO 2022129888 A1 | 23-06-2022 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009034369 B3
- EP 2174097 B1
- DE 102020114222 A1